(19) Europäisches Patentamt
European Patent Office
Office européen des brevets

(11) **EP 2 538 605 A1**

(12) **EUROPEAN PATENT APPLICATION**

(43) Date of publication:
**26.12.2012 Bulletin 2012/52**

(51) Int Cl.:
**H04L 5/00** (2006.01)

(21) Application number: **12173238.2**

(22) Date of filing: **22.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.06.2011 US 201113167354**

(71) Applicant: **LSI Corporation**
**Milpitas, CA 95035 (US)**

(72) Inventor: **Gazit, Ido**
**34748 Haifa (IL)**

(74) Representative: **Williams, David John**
**Page White & Farrer**
**Bedford House**
**John Street**
**London WC1N 2BF (GB)**

(54) **Reducing Complexity Of Physical Downlink Control Channel Resource Element Group Mapping On Long Term Evolution Downlink**

(57) An apparatus including a control bit generating module and a control channel mapping module. The control bit generating module may be configured to generate control bits to be carried by at least one control channel. The control channel mapping module may be configured to map at least one control channel to resource element groups. A resource element pointer of the control channel mapping module is generally incremented by a multiple of two on each mapping iteration.

FIG. 6

## Description

### Field of the invention

The present invention relates to wireless communication generally and, more particularly, to a method and/or apparatus for reducing the complexity of the physical downlink control channel (PDCCH) resource element group (REG) mapping on long term evolution (LTE) downlink (DL).

### Background of the Invention

In a cellular system implementing a third generation mobile network technology compliant with the 3rd Generation Partnership Project (3GPP) Long Term Evolution (LTE) standard (3GPP TS 36.211 V9.1.0 (2010-03), high bit rate and latency are very restricted when compared to previous standards. The high bit rate and latency restrictions pose many challenges to developers of an LTE compliant system. In order to meet latency requirements, processing needs to be fast. For fast processing, powerful processors are needed, which increases the project budget. The powerful processors also increase power consumption. An LTE downlink (DL) has a maximum bit rate of 300Mbps for Release-8 and Release-9 and 600Mbps for Release-10 (LTE-ADVANCED), for a bandwidth of 20MHz. The bit rate can be split among several mobile units (referred to as user equipment or UEs).

The LTE Physical Layer (PHY) employs orthogonal frequency division multiplexing (OFDM) as the underlying modulation technology. OFDM systems break the available bandwidth into many narrower sub-carriers and transmit data in parallel streams. Each subcarrier is modulated using varying levels of quadrature amplitude modulation (QAM). Each OFDM symbol is therefore a linear combination of the instantaneous signals on each of the sub-carriers in the channel. The LTE PHY uses orthogonal frequency division multiple access (OFDMA) on the downlink (DL) as the underlying multiplexing scheme. OFDMA allows data to be directed to or from multiple users on a subcarrier-by-subcarrier basis for a specified number of symbol periods.

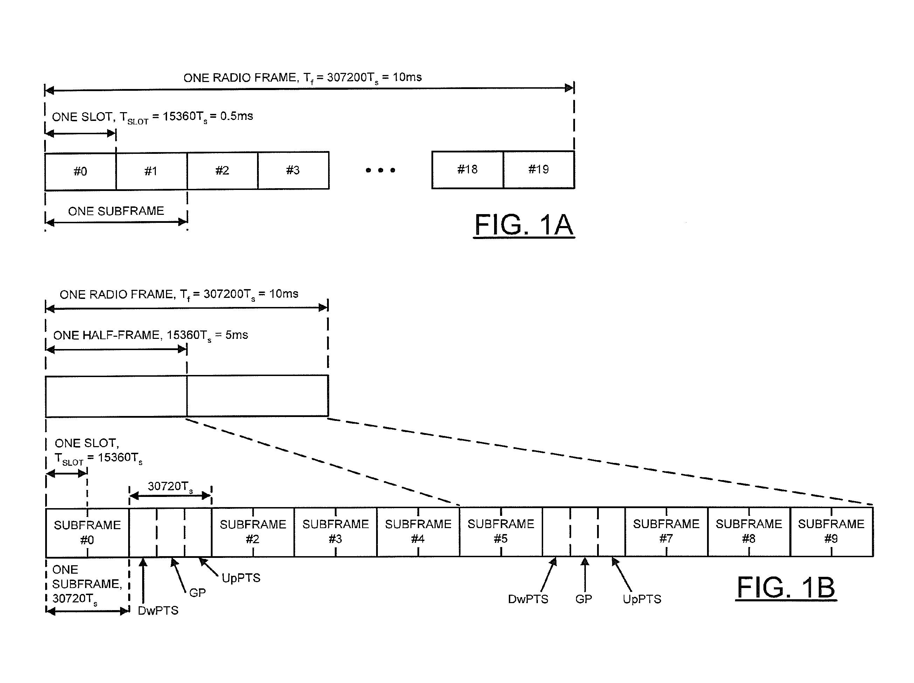

Referring to FIGS. 1A and 1B, diagrams are shown illustrating generic LTE frame structures. An LTE frame structure type 1 (FIG. 1A) is used with frequency division duplexing (FDD). An LTE frame structure type 2 (FIG. 1B) is used with time division duplexing (TDD). The LTE frame structure type 1 is 10 milliseconds (ms) in duration ($T_f = 307200T_s = 10ms$). The LTE frame structure type 1 is divided into 10 subframes, each subframe being 1ms long. Each subframe is further divided into two consecutive slots, where subframe i includes slots 2i and 2i+1. Each slot has a length ($T_{SLOT}$) of 0.5ms duration ($T_{SLOT} = 15360T_s = 0.5ms$). In each sub-frame (1ms), 12 or 14 OFDM symbols (6 or 7 OFDM symbols per slot) are transmitted, depending on whether a normal or extended cyclic prefix is employed. For FDD, ten subframes are available for downlink transmission and ten subframes are available for uplink transmissions in each 10 ms interval.

The LTE frame structure type 2 is also 10 ms in duration ($T_f = 307200T_s = 10ms$). The LTE frame structure type 2 is generally divided into two half frames of length $153600T_s = 5ms$ each. Each half frame has five subframes, each subframe being $30720T_s = 1ms$. Each subframe i is defined as two slots, 2i and 2i+1. Each slot has a length $T_{SLOT} = 15360T_s = 0.5ms$.

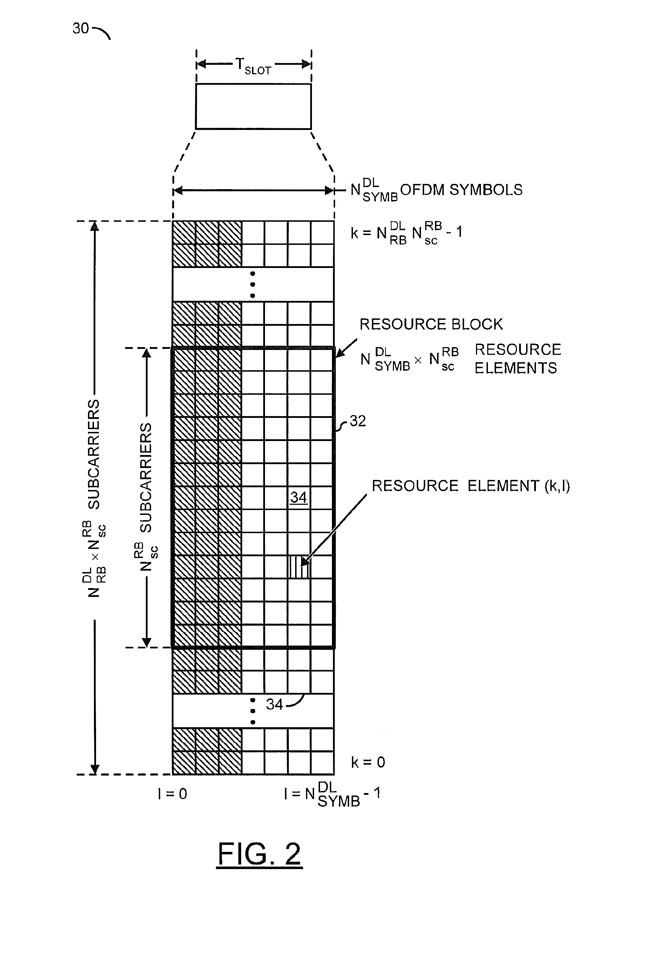

Referring to FIG. 2, a diagram of a downlink resource grid 30 is shown illustrating the first slot (seven OFDM symbols and 0.5 ms) in a frame. The transmitted signal in each slot can be described by a resource grid 30 made up of $N_{RB}^{DL} N_{SC}^{RB}$ subcarriers and $N_{SYMB}^{DL}$ OFDM symbols. The first OFDM symbols (up to four OFDM symbols) are allocated to control and the other OFDM symbols are allocated to data. In the resource grid 30, three OFDM symbols are illustrated as being allocated to the control channel (indicated with crosshatching). The physical resources of up to four OFDM symbols are not negligible when compared to the data, and decreasing the processing power used for control is desirable.

Available downlink bandwidth is divided into physical resource blocks (PRBs) 32. The total number of available subcarriers depends on the overall transmission bandwidth of the system. The LTE specification defines parameters for system bandwidth from 1.25 MHz to 20 MHz. A PRB 32 is defined as consisting of 12 consecutive subcarriers for one slot (0.5 msec) in duration. A PRB 32 is the smallest element of resource allocation assigned by a base station scheduler. Each box 34 within the resource grid 30 represents a single subcarrier for one symbol period and is referred to as a resource element (RE). In multiple-input-multiple-output (MIMO) applications, there is a resource grid for each transmitting antenna.

Three physical control channels are defined on the LTE downlink: a physical downlink control channel (PDCCH), a physical hybrid-ARQ indicator channel (PHICH), and a physical control format indicator channel (PCFICH). The PDCCH channel is responsible for signaling downlink scheduling assignments and uplink scheduling grants. The PDCCH is the control channel that consumes the majority of the physical control resources.

It would be desirable to implement a method and/or apparatus for reducing the complexity of the PDCCH resource element group (REG) mapping on LTE DL.

## Summary of the Invention

The present invention concerns an apparatus including a control bit generating module and a control channel mapping module. The control bit generating module may be configured to generate control bits to be carried by at least one control channel. The control channel mapping module may be configured to map at least one control channel to resource element groups. A resource element pointer of the control channel mapping module is generally incremented by a multiple of two on each mapping iteration.

The objects, features and advantages of the present invention include providing a method and/or apparatus for reducing the complexity of the physical downlink control channel (PDCCH) resource element group (REG) mapping on long term evolution (LTE) downlink (DL) that may (i) introduce a significant decrease of the resource elements group (REG) mapping of the PDCCH on LTE DL systems, (ii) prove the algorithm depicted on the 3GPP standard can be improved by decreasing the inner loop of the REG mapping algorithm by half, (iii) prove decreasing the inner loop of the REG mapping algorithm by half is valid for all cases of the LTE DL, (iv) be applicable to both hardware (HW) and software (SW) implementations, and/or (v) increment an index by a multiple of two instead of by one.

## Brief Description of the Drawings

These and other objects, features and advantages of the present invention will be apparent from the following detailed description and the appended claims and drawings in which:

> FIGS. 1A and 1B are diagrams illustrating example LTE frames;
> FIG. 2 is a diagram illustrating an LTE resource grid;
> FIG. 3 is a diagram illustrating a system in which an embodiment of the present invention may be implemented;
> FIG. 4 is a diagram illustrating example components employed in processing a downlink channel in accordance with an embodiment of the present invention;
> FIG. 5 is a diagram illustrating a processing unit in accordance with an example embodiment of the present invention;
> FIG. 6 is a diagram illustrating an example of 3 OFDM symbols allocated to control and resource elements groups (REGs) in accordance with the present invention; and
> FIG. 7 is a flow diagram illustrating a process in accordance with the present invention.

## Detailed Description of the Preferred Embodiments

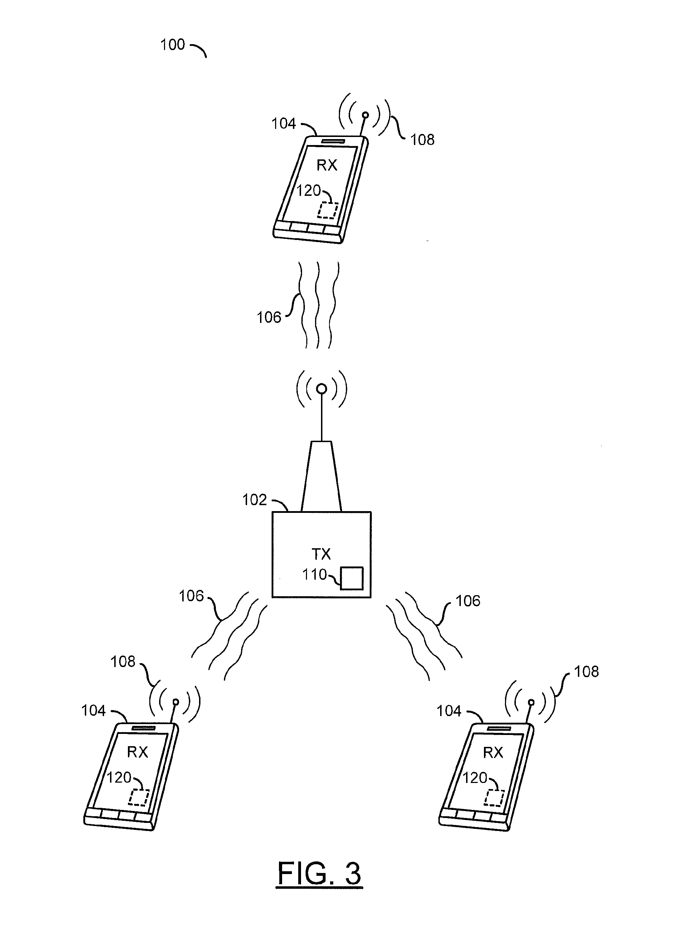

Referring to FIG. 3, a diagram of a system 100 is shown illustrating a communications system implemented in accordance with an example embodiment of the present invention. The system 100 may implement a wireless communications system. In one example, the system 100 may implement a third generation cellular communication system compliant with the 3GPP Long Term Evolution (LTE) standard: The system 100 generally comprises at least one base station 102 and a number of mobile units 104. The base station 102 may transmit signals to the mobile units 104 via a downlink channel 106. Each of the mobile units 104 may transmit signals to the base stations 102 via an uplink channel 108. The system 100 may also be implemented with multiple base stations 102. The base station(s) 102 may include a processing unit 110. Each of the mobile units 104 may include a processing unit 120. The processing units 110 and 120 may be configured to manage communications between the base station(s) 102 and the mobile units 104.

The processing unit 110 may be configured to perform an iterative downlink process for resource elements mapping of orthogonal frequency division multiplexed (OFDM) symbols. In one example, the processor 110 may implement hardware to perform the downlink processing in accordance with the present invention. In another example, the downlink processing in accordance with the present invention may be performed by software executed on the processing unit 110. In one example, the software for performing the downlink processing in accordance with the present invention may be written to a Flash memory or other nonvolatile memory (e.g., programmable read only memory (PROM), erasable programmable read only memory (EPROM), electrically erasable programmable read only memory (EEPROM), bubble memory, disk or disc media, etc.). Additionally, even volatile memory, such as dynamic random access memory (DRAM) or static random access memory (SRAM), may be used. For example, the software may be loaded from a non-volatile storage medium at power-up.

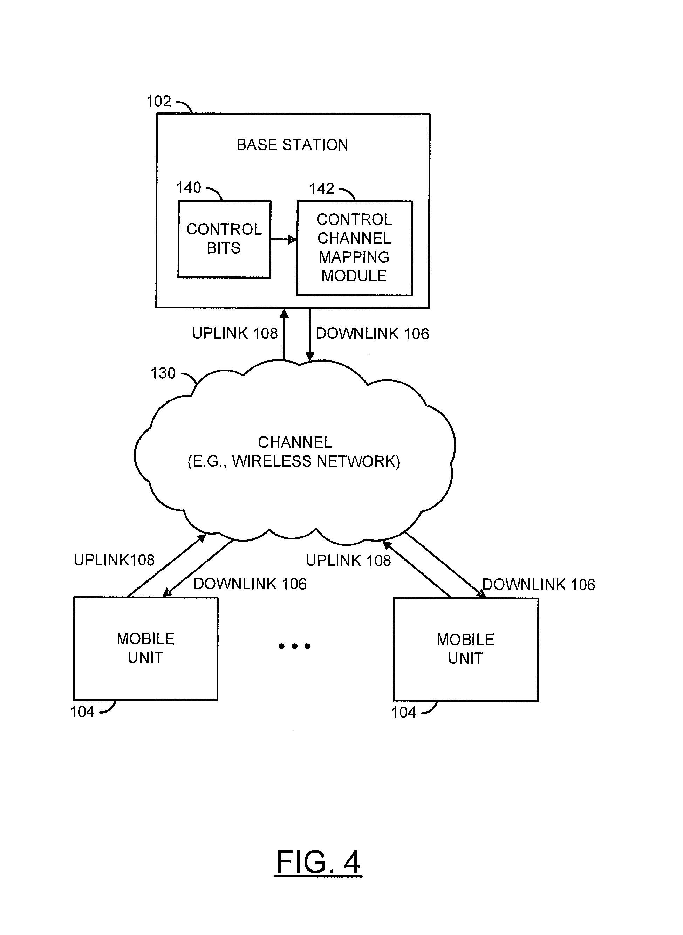

Referring to FIG. 4, a diagram is shown illustrating example components that may be employed by the base station 102 in processing a downlink signal 106 of the system 100. In general, the base station 102 may generate the downlink signal 106 that may be used, in one example, by mobile units 104. A channel 130 may be implemented, for example, as a wireless communications channel. In one example, the channel 130 may be implemented as a cellular communications channel of a wireless communications network (e.g., a 3GPP LTE network, etc.). In one example, the base station 102 may include a downlink control bits processing component (or generating module) 140 and a control channel mapping module 142. The downlink control bits processing component 140 and the control channel mapping module 142 may be implemented with the processor 110 of FIG. 2.

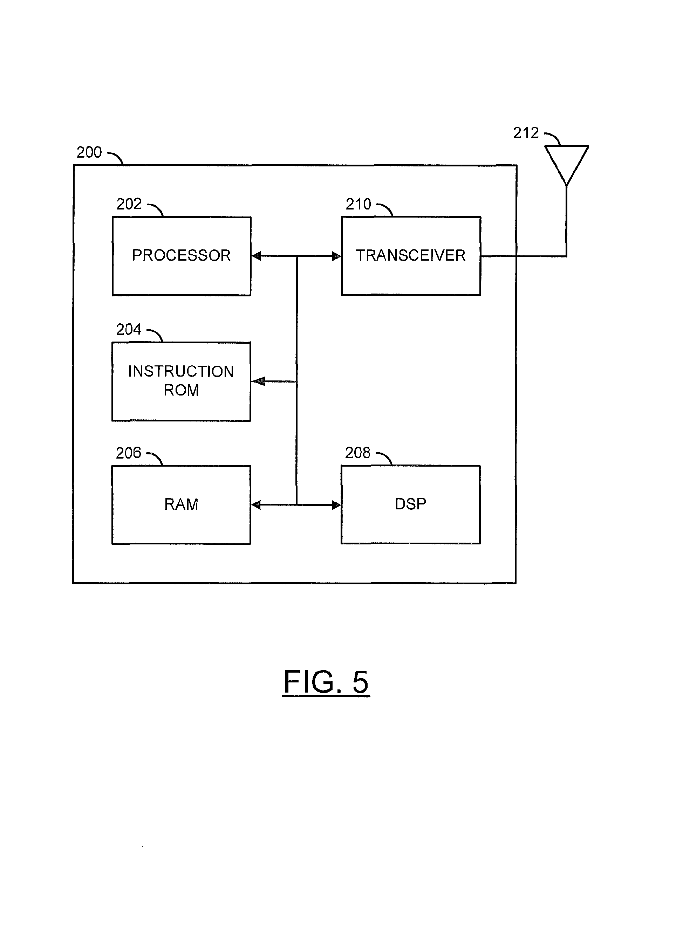

Referring to FIG. 5, a block diagram is shown illustrating an example processing unit 200 that may be configured to implement resource elements mapping in accordance with a preferred embodiment of the present invention. In one example, the processing unit 110 of FIG. 1 may be implemented using the processing unit 200. The processing unit 200 may include, but is not limited to, a block (or module) 202, a block (or module) 204, a block (or module) 206, a block (or module) 208, a block (or module) 210, and a block (or module) 212. The block 202 may be implemented, in one example, as an embedded processor (e.g., ARM, etc.). The block 204 may be implemented as a read only memory (ROM). The block 206 may comprise random access memory (RAM). The block 208 may implement a digital signal processor (DSP). The block 210 may be implemented, in one example, as an analog/RF unit (e.g., a transceiver). In another example, the block 210 may implement a transmitter and a receiver that are separate. The block 212 may implement an antenna (e.g., a cellular antenna, etc.). The block 210 may be configured to transmit and receive information via the antenna 212. The blocks 202-210 may be connected together using one or more busses. In one example, the block 204 may store computer executable instructions for controlling the processor 202 and/or the processor 208 in accordance with the teachings presented herein.

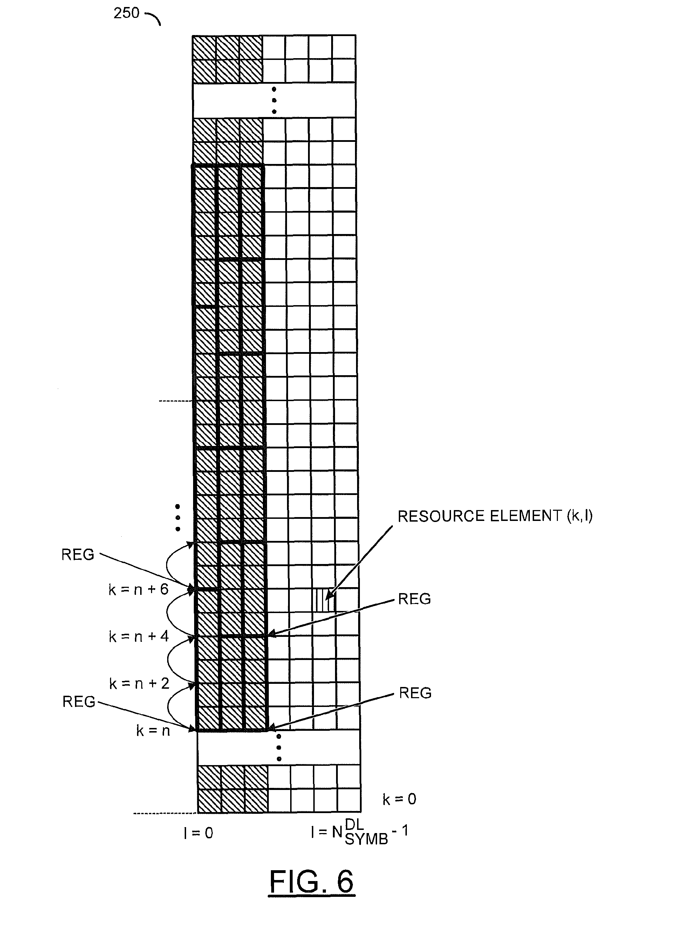

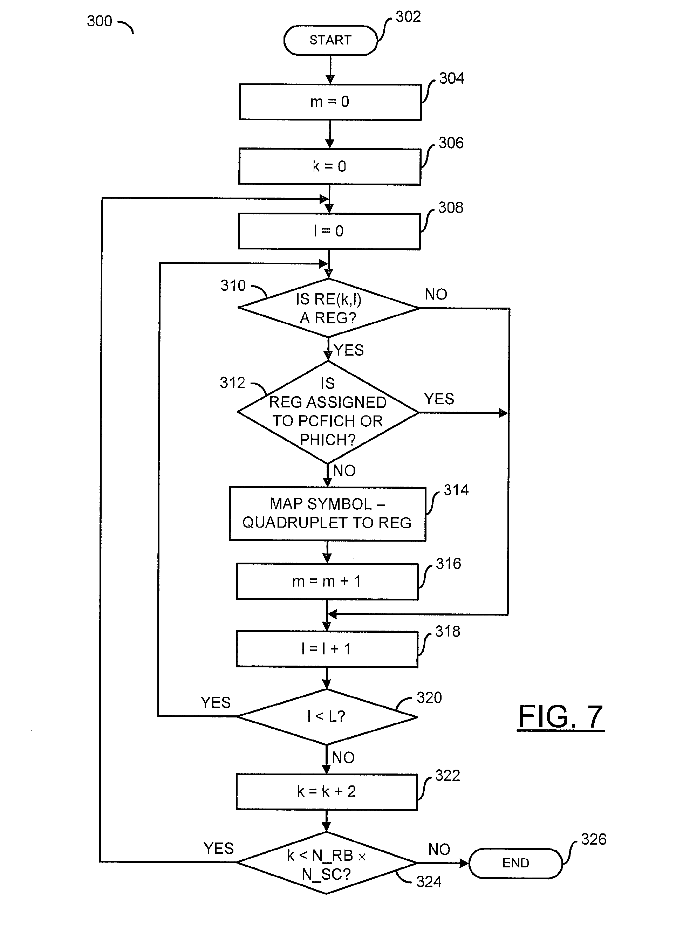

Referring to FIG. 6, a diagram of a resource grid 250 is shown illustrating an example of three OFDM symbols allocated to control and resource element groups in accordance with embodiments of the present invention. Following modulation and precoding, the mapping of the control symbols may be done in units of four symbols (or symbol quadruplets). The symbol quadruplets may be mapped into resource element groups (REGs). In one example, each REG may contain four resource elements (REs) for an OFDM symbol without reference symbols (RS), and six REs for an OFDM symbol that includes one or more reference symbols. In a first stage, the PCFICH and the PHICH may be mapped. In a second stage, the PDCCH symbols may be mapped according to the process described below in connection with FIG. 7.

Referring to FIG. 7, a flow diagram is shown illustrating a process 300 in accordance with an example embodiment of the present invention. The process 300 may implement an iterative downlink process for mapping PDCCH resource elements groups (REGs) to orthogonal frequency division multiplexed (OFDM) symbols on an LTE downlink (DL). The process (or method) 300 may comprise a step (or state) 302, a step (or state) 304, a step (or state) 306, a step (or state) 308, a step (or state) 310, a step (or state) 312, a step (or state) 314, a step (or state) 316, a step (or state) 318, a step (or state) 320, a step (or state) 322, a step (or state) 324, and a step (or state) 326. In the state 302, the process 300 may begin (start). In the step 304, the process 300 may initialize a first loop variable (e.g., m) to zero. In the step 306, the process 300 may initialize a second loop variable (e.g., k) to zero. In the step 308, the process 300 may initialize a third loop variable (e.g., 1) to zero. In one example, the loop variables m, k, 1 may be implemented as integer variables. In another example, the loop variables m, k, 1 may be implemented as counters. The first loop variable m may represent a resource-element group number. The second loop variable k may represent a resource element pointer. The third loop variable 1 may represent an OFDM symbol number. The second and third loop variables may be used to form an ordered pair (e.g., (k,1)) identifying a current resource element.

In the step 310, the process 300 may determine whether the resource element (k,1) represents a resource-element group. If the resource element (k,1) represents a resource-element group, the process 300 may move to the step 312. Otherwise, the process 300 moves to the step 318. In the step 312, the process 300 may determine whether the resource-element group is assigned to the PCFICH or the PHICH. If the resource-element group is not assigned to the PCFICH or the PHICH, the process 300 may move to the step 314. Otherwise, the process 300 may move to the step 318. In the step 314, the process 300 may map a symbol-quadruplet (e.g., w(m)) to the resource-element group represented by (k,1) for each antenna port p. The process 300 may then move to the step 316. In the step 316, the process 300 increments the first loop variable m by one and moves to the step 318.

In the step 318, the process 300 increments the third loop variable 1 by one and moves to the step 320. In the step 320, the process 300 determines whether 1<L, where L corresponds to the number of OFDM symbols used for PDCCH transmission as indicated by the sequence transmitted on the PCFICH. If 1<L, the process 300 returns to the step 310. Otherwise, the process 300 moves to the step 322. In the step 322, the process 300 increments the second loop variable k by 2 and moves to the step 324. In the step 324, the process 300 determines whether the value of the second loop variable k is less than the total number of resource elements in the OFDM symbol (e.g., $k < N\_RB*N\_SC$). If the second loop variable k is less than the total number of resource elements in the OFDM symbol the process 300 returns to the step 308. Otherwise, the process 300 moves to the step 326 and terminates.

A process in accordance with an embodiment of the present invention generally provides a solution for implementing PDCCH resource elements group (REG) mapping of OFDM symbols in either a single or multi-user transmission. The process may introduce a significant decrease in the complexity of the resource elements group (REG) mapping of the physical downlink control channel (PDCCH) on a long term evolution (LTE) downlink (DL) system. In one example, an embodiment of the present invention may improve the PDCCH REG mapping of the 3GPP standard by decreasing the inner loop of the REG mapping process by half. The process described herein is generally valid for all cases of the LTE DL. The PDCCH REG mapping process in accordance with an embodiment of the present invention is generally valid for both hardware (HW) and software (SW) implementations.

Implementation of the PDCCH REG mapping process in accordance with the present invention generally reduces significantly the processing power of the REG mapping of the PDCCH. Pseudo code implemented in accordance with the teachings contained herein may be implemented in many ways. The process in accordance with embodiments of the present invention may reduce by half the number of iterations involved in REG mapping of the PDCCH, because each REG generally has 4 or 6 resource elements and according to the 3GPP standard (e.g., 3GPP TS 36.211, section 6.2.4) each REG is aligned to the beginning of the resource grid (meaning that the first REG starts when k=0). As illustrated in FIG. 6 above, k may be incremented by two because when k is odd, the corresponding RE (e.g., for any 1) will not represent a beginning of a REG. In general, increasing k by two instead of one generally reduces the number of iterations, for example, from 1200 to 600 in the case of a system with 20MHz bandwidth (BW).

In alternative embodiments of the present invention, the number of iterations may be reduced further by the addition of more conditions to the code. In one example, each OFDM symbol 1 may be allocated a respective resource element pointer (e.g., $k\_0$, $k\_1$, $k\_2$, etc.) and the resource element pointers $k\_0$, $k\_1$, $k\_2$ may be incremented by a value (e.g., 4, 6, etc.) depending on the respective REG size. A check may be performed to for each 1 to determine the appropriate increment for $k\_0$, $k\_1$, $k\_2$. In another example, REGs may be allocated only when the resource element pointer $k\_n$ (n=0, 1, 2, ...) is equal to the minimum value among $k\_0$, $k\_1$, $k\_2$. However, other schemes for incrementing the resource element pointer k or pointers $k\_0$, $k\_1$, $k\_2$ by a value greater than one may be implemented accordingly to meet the design criteria of a particular implementation.

The functions performed by the diagram of FIG. 7 may be implemented using one or more of a conventional general purpose processor, digital computer, microprocessor, microcontroller, RISC (reduced instruction set computer) processor, CISC (complex instruction set computer) processor, SIMD (single instruction multiple data) processor, signal processor, central processing unit (CPU), arithmetic logic unit (ALU), video digital signal processor (VDSP) and/or similar computational machines, programmed according to the teachings of the present specification, as will be apparent to those skilled in the relevant art(s). Appropriate software, firmware, coding, routines, instructions, opcodes, microcode, and/or program modules may readily be prepared by skilled programmers based on the teachings of the present disclosure, as will also be apparent to those skilled in the relevant art(s). The software is generally executed from a medium or several media by one or more of the processors of the machine implementation.

The present invention may also be implemented by the preparation of ASICs (application specific integrated circuits), Platform ASICs, FPGAs (field programmable gate arrays), PLDs (programmable logic devices), CPLDs (complex programmable logic device), sea-of-gates, RFICs (radio frequency integrated circuits), ASSPs (application specific standard products), one or more monolithic integrated circuits, one or more chips or die arranged as flip-chip modules and/or multi-chip modules or by interconnecting an appropriate network of conventional component circuits, as is described herein, modifications of which will be readily apparent to those skilled in the art(s).

The present invention thus may also include a computer product which may be a storage medium or media and/or a transmission medium or media including instructions which may be used to program a machine to perform one or more processes or methods in accordance with the present invention. Execution of instructions contained in the computer product by the machine, along with operations of surrounding circuitry, may transform input data into one or more files on the storage medium and/or one or more output signals representative of a physical object or substance, such as an audio and/or visual depiction. The storage medium may include, but is not limited to, any type of disk including floppy disk, hard drive, magnetic disk, optical disk, CD-ROM, DVD and magneto-optical disks and circuits such as ROMs (read-only memories), RAMs (random access memories), EPROMs (electronically programmable ROMs), EEPROMs (electronically erasable ROMs), WPROM (ultra-violet erasable ROMs), Flash memory, magnetic cards, optical cards, and/or any type of media suitable for storing electronic instructions.

The elements of the invention may form part or all of one or more devices, units, components, systems, machines and/or apparatuses. The devices may include, but are not limited to, servers, workstations, storage array controllers, storage systems, personal computers, laptop computers, notebook computers, palm computers, personal digital assistants, portable electronic devices, battery powered devices, set-top boxes, encoders, decoders, transcoders, compressors, decompressors, pre-processors, post-processors, transmitters, receivers, transceivers, cipher circuits, cellular telephones, digital cameras, positioning and/or navigation systems, medical equipment, heads-up displays, wireless devices, audio recording, storage and/or playback devices, video recording, storage and/or playback devices, game platforms, peripherals and/or multi-chip modules. Those skilled in the relevant art(s) would understand that the elements of the invention may be implemented in other types of devices to meet the criteria of a particular application.

While the invention has been particularly shown and described with reference to the preferred embodiments thereof, it will be understood by those skilled in the art that various changes in form and details may be made without departing from the scope of the invention.

**Claims**

1. An apparatus comprising:

    a control bit generating means configured to generate control bits to be carried by at least one control channel; and
    a control channel mapping means configured to map at least one control channel to resource element groups, wherein a resource element pointer of said control channel mapping means is incremented by a multiple of two on each mapping iteration.

2. The apparatus according to claim 1, wherein said apparatus is part of a base station of a wireless communications network.

3. The apparatus according to claim 1, wherein said apparatus is part of a base station of a 3GPP LTE compliant wireless network.

4. The apparatus according to claim 1, wherein said control channel means module is further configured to allocate resource elements to a physical downlink control channel (PDCCH), a physical hybrid-ARQ indicator channel (PHICH), and a physical control format indicator channel (PCFICH).

5. The apparatus according to claim 1, wherein said control channel is mapped to subcarriers with an even number of subcarriers as a basic unit.

6. The apparatus according to claim 5, wherein said control channel is mapped to resource element groups comprising either four or six subcarriers.

7. The apparatus according to claim 1, wherein said control channel is mapped to subcarriers in a resource block assigned to downlink data transmission.

8. The apparatus according to claim 1, wherein said control channel is mapped to subcarriers in first slot of a subframe assigned to downlink data transmission.

9. A method of mapping a downlink control channel to a physical channel, the method comprising:

    generating control bits to be carried by at least one control channel; and
    mapping at least one control channel to resource element groups, wherein a resource element pointer is incremented by a multiple of two on each iteration of said mapping.

10. The method according to claim 9, wherein said control channel is carried by a downlink channel from a base station to a mobile unit of a wireless communications network.

11. The method according to claim 10, wherein said base station is part of a 3GPP LTE compliant wireless network.

12. The method according to claim 9, further comprising allocating resource elements to a physical downlink control channel (PDCCH), a physical hybrid-ARQ indicator channel (PHICH), and a physical control format indicator channel (PCFICH).

13. The method according to claim 9, wherein said control channel is mapped to subcarriers with an even number of subcarriers as a basic unit.

14. The method according to claim 13, wherein said control channel is mapped to resource element groups comprising either four or six subcarriers.

FIG. 1A

ONE RADIO FRAME, $T_f = 307200T_s = 10\text{ms}$

ONE SLOT, $T_{SLOT} = 15360T_s = 0.5\text{ms}$

ONE SUBFRAME

#0  #1  #2  #3  ...  #18  #19

FIG. 1B

ONE RADIO FRAME, $T_f = 307200T_s = 10\text{ms}$

ONE HALF-FRAME, $15360T_s = 5\text{ms}$

ONE SLOT, $T_{SLOT} = 15360T_s$

$30720T_s$

ONE SUBFRAME, $30720T_s$

SUBFRAME #0  SUBFRAME #2  SUBFRAME #3  SUBFRAME #4  SUBFRAME #5  SUBFRAME #7  SUBFRAME #8  SUBFRAME #9

DwPTS  GP  UpPTS

$$T_{SLOT}$$

$N_{SYMB}^{DL}$ OFDM SYMBOLS

$k = N_{RB}^{DL} N_{sc}^{RB} - 1$

RESOURCE BLOCK

$N_{SYMB}^{DL} \times N_{sc}^{RB}$ RESOURCE ELEMENTS

32

34

RESOURCE ELEMENT (k,l)

$N_{RB}^{DL} \times N_{sc}^{RB}$ SUBCARRIERS

$N_{sc}^{RB}$ SUBCARRIERS

34

$k = 0$

$l = 0$

$l = N_{SYMB}^{DL} - 1$

## FIG. 2

FIG. 3

## FIG. 4

FIG. 5

250

RESOURCE ELEMENT (k,l)

REG

$k = n + 6$

REG

$k = n + 4$

REG

$k = n + 2$

REG

REG

$k = n$

REG

$k = 0$

$l = 0$

$l = N_{SYMB}^{DL} - 1$

## FIG. 6

300

302
START

304
m = 0

306
k = 0

308
l = 0

310
IS RE(k,l) A REG? — NO

YES

312
IS REG ASSIGNED TO PCFICH OR PHICH? — YES

NO

314
MAP SYMBOL – QUADRUPLET TO REG

316
m = m + 1

318
l = l + 1

320
l < L? — YES

NO

322
k = k + 2

324
k < N_RB × N_SC? — NO

YES

326
END

FIG. 7

Europäisches
Patentamt

European
Patent Office

Office européen
des brevets

# EUROPEAN SEARCH REPORT

Application Number

EP 12 17 3238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZTE ET AL: "Way Forward on REG Definition for Interleaved R-PDCCH", 3GPP DRAFT; R1-105958 WF ON REG FOR R-PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115 - 20101119, 19 November 2010 (2010-11-19), XP050598913, [retrieved on 2010-11-19] * the whole document * | 1-14 | INV. H04L5/00 |
| A | PANASONIC: "Mapping of physical resources to R-PDCCH", 3GPP DRAFT; R1-106088, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050489575, [retrieved on 2010-11-09] * the whole document * | 1-14 | |
| A | EP 2 071 790 A2 (LG ELECTRONICS INC [KR]) 17 June 2009 (2009-06-17) * abstract; figures 1-6n * * paragraph [0009] - paragraph [0024] * * paragraph [0043] - paragraph [0048] * -/-- | 1-14 | TECHNICAL FIELDS SEARCHED (IPC) H04L |

The present search report has been drawn up for all claims

| Place of search | Date of completion of the search | Examiner |
|---|---|---|
| Munich | 14 November 2012 | Haas, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EUROPEAN SEARCH REPORT**

Application Number

EP 12 17 3238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUALCOMM EUROPE ET AL: "Clarifying PDCCH RE mapping", 3GPP DRAFT; R1-090541 CR ON CLARIFYING PDCCH RE MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090119, 19 January 2009 (2009-01-19), XP050318424, [retrieved on 2009-01-19] * the whole document * ----- | 1-14 | |

TECHNICAL FIELDS
SEARCHED      (IPC)

The present search report has been drawn up for all claims

| Place of search | Date of completion of the search | Examiner |
|---|---|---|
| Munich | 14 November 2012 | Haas, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                               
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 17 3238

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2012

| Patent document cited in search report | Publication date | Patent family member(s) | Publication date |
|---|---|---|---|
| EP 2071790 A2 | 17-06-2009 | EP 2071790 A2 | 17-06-2009 |
| | | US 2009154583 A1 | 18-06-2009 |
| | | US 2011075626 A1 | 31-03-2011 |
| | | WO 2009075484 A2 | 18-06-2009 |

EPO FORM P0459

For more details about this annex : see Official Journal of the European Patent Office, No. 12/82